# EUROPEAN PATENT APPLICATION

(11) **EP 2 082 909 A1**
(43) Date of publication of application: **29.07.2009**
(21) Application number: 09150139.5
(22) Date of filing: 07.01.2009
(51) Int. Cl.: B60J 5/04, B60R 21/21

(54) **Side impact absorbing structure for vehicle**

(30) Priority: 23.01.2008 JP 2008013044; 23.01.2008 JP 2008013046
(71) Applicant: Mazda Motor Corporation, Fuchu-cho Aki-gun Hiroshima 730-8670 (JP)
(72) Inventor: Hirotani, Yasunari, Hiroshima-ken (JP)
(74) Representative: Herrmann, Uwe

(57) **Abstract**

A side impact absorbing structure for a vehicle is provided. The structure includes an impact absorbing member which is accommodated in a car body side wall at a position corresponding to a seating region set on a seat, and a buffer unit which is accommodated in the car body side wall and cooperates with the impact absorbing member upon lateral collision to moderate an impact on a side portion of a passenger. The buffer unit includes a rigid body portion which is arranged at a position where the rigid body portion does not overlap the impact absorbing member in the car body side wall and the seating region when seen from the side of a car body.

## Description

### BACKGROUND OF THE INVENTION

### Field of the Invention

The present invention relates to a side impact absorbing structure for a vehicle.

### Description of the Related Art

Conventionally, a seating region for a seat in an automobile is set such that the majority of the anticipated passengers can be seated appropriately. To absorb impact upon lateral collision, an impact absorbing member is accommodated in that portion of a car body side wall such as a side door which corresponds to the seating region. When the car body side wall constitutes a side door, the impact absorbing member is arranged between, for example, a module plate attached to a door inner panel, and a door trim. Upon lateral collision, the impact absorbing member is displaced into the passenger compartment together with the module plate and elastically abuts against the passenger's shoulder and its vicinity through the door trim, thereby moderating the impact applied to the passenger.

To obtain an effective impact absorbing effect, it is desired to ensure a sufficient thickness for the impact absorbing member. When the thickness of the impact absorbing member is increased, however, the thickness of the entire side door increases, and problems occur such as a low degree of seat design freedom and a narrow space in the passenger compartment.

An arrangement is realized in which a so-called side air bag is mounted. The side air bag is provided to a side door or seat and expanded between the side door and the passenger upon lateral collision to absorb impact of the lateral collision (for example, see Japanese Patent Laid-Open Nos. 02-249740, 06-191369, and 09-086322).

Upon lateral collision, as the space that can absorb the impact energy is smaller than in the case of a frontal collision, the side air bag must be expanded within a very short period of time, and a corresponding expanding pressure must be applied. The expanding pressure can be excessive for a child even if it may be safe for an adult. Hence, minimization of the expanding pressure is required.

Japanese Patent Laid-Open Nos. 02-249740, 06-191369, and 09-086322 disclose an arrangement in which the air bag unit is provided in the door at almost the height of the trunk of the seated passenger. In this arrangement, as the air bag unit itself is a highly rigid member, the expanding pressure of the air bag must be further increased such that the air bag unit will not hit the passenger.

In this manner, regarding the layout of the impact absorbing member and side air bag, sufficient studies must be made from the viewpoint of vehicle design, safety, and the like.

In the arrangement disclosed in any one of Japanese Patent Laid-Open Nos. 02-249740, 06-191369, and 09-086322 described above, the inflator and air bag main body are arranged to overlap the passenger when seen from the side of the car body. This layout decreases the impact absorbing stroke. Therefore, the expanding pressure of the air bag must be increased such that the air bag unit will not hit the passenger. However, when considering an adverse effect on the child passenger, the expanding pressure cannot be minimized.

Japanese Patent Laid-Open No. 06-191369 discloses an arrangement in which the air bag is expanded between the door inner panel and trim. With this arrangement, however, upon lateral collision, a member such as an armrest which is harder than the air bag hits the trunk of the passenger. This lacks protection of the passenger. Also, it is difficult to obtain layout compatibility of the air bag, window glass, and the like at the door belt line portion.

In contrast to this, Japanese Patent Laid-Open No. 09-086322 discloses an arrangement in which a pad is provided on the rear side of the door air bag. With this arrangement, however, the air bag unit and impact absorbing member overlap, and accordingly the impact absorbing stroke decreases.

An arrangement is also known in which a side air bag is arranged in the seat. However, this arrangement decreases the degree of seat design freedom, which is inevitably disadvantageous in seat arrangement. Also, when employing a side air bag of a type to be attached to a seat, attention must be paid to the possible influence (the attaching position, expanding direction, gas pressure, and the like) on a child and a child seat with seating positions that are unpredictable.

It may be possible to arrange the side air bag on a side sill. In a vehicle having a horizontally long door such as a sliding door, a rail for the sliding door must be disposed on the side sill. Such a side sill is difficult to store the air bag.

It may be possible to arrange the side air bag in a pillar. Usually, a seat is slidable forward/backward. Considering this fact, depending on the sliding position, the air bag set position is too far from the passenger on the seat. This inevitably hinders the air bag from being expanded quickly and reliably.

Japanese Patent Laid-Open No. 04-356245 discloses an arrangement in which a cylindrical impact bar stores an air bag inflator.

Japanese Patent Laid-Open No. 10-250512 discloses an arrangement in which a door glass passing gap is adjusted such that the impact absorbing member can be moved toward the passenger compartment as soon as possible upon lateral collision.

None of these references discloses or suggests the characteristic features of the present invention.

### SUMMARY OF THE INVENTION

It is an object of the present invention to provide a side impact absorbing structure for a vehicle, in which a car body side wall can sufficiently absorb the lateral collision load and disperse the load transmitted to the passenger while ensuring the degree of seat design freedom and a wide passenger compartment space, thereby improving safety.

The present invention in its one aspect provides a side impact absorbing structure for a vehicle as specified in claims 1 to 12.

Further features of the present invention will become apparent from the following description of an exemplary embodiment with reference to the attached drawings.

### BRIEF DESCRIPTION OF THE DRAWINGS

The accompanying drawings, which are incorporated in and constitute a part of the specification, illustrate embodiments of the invention and, together with the description, serve to explain the principles of the invention.

Fig. 1 is an overall side view of a vehicle in an embodiment;

Fig. 2 is a side perspective view of the main part of the vehicle in the embodiment;

Fig. 3 is a sectional view taken along the line A - A in Fig. 2;

Fig. 4 is a sectional view taken along the line B - B in Fig. 2;

Fig. 5 is a sectional view taken along the line C - C in Fig. 2;

Fig. 6 is a sectional view taken along the line D - D in Fig. 2;

Fig. 7 is a sectional view taken along the line E - E in Fig. 2; and

Fig. 8 is a view for explaining the effect of a side impact absorbing structure for the vehicle in the embodiment against lateral collision.

### DESCRIPTION OF THE EMBODIMENT

An exemplary embodiment, features, and aspects of the present invention will be described in detail below with reference to the drawings. The present invention is not limited by the disclosure of the embodiment and all combinations of the features described in the embodiment are not always indispensable to solving means of the present invention.

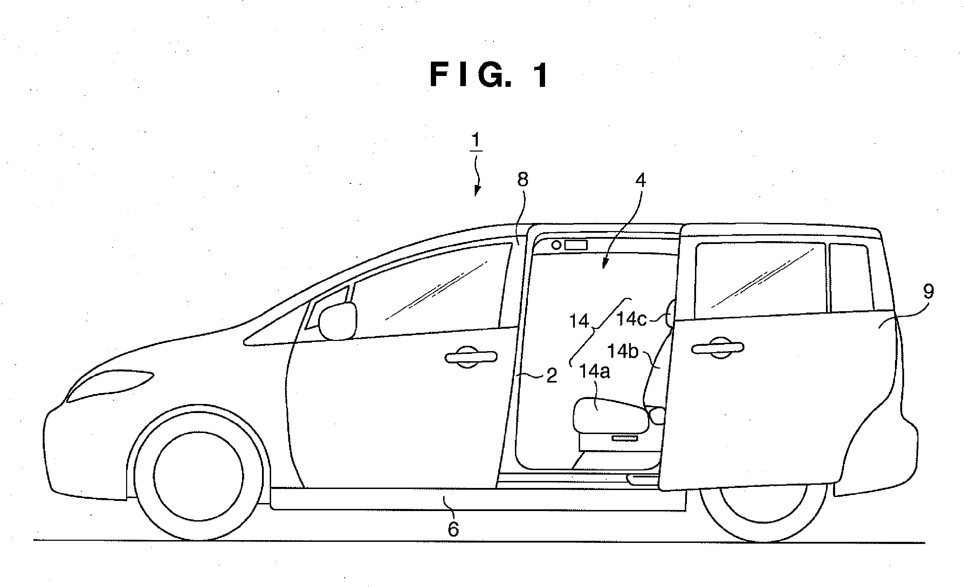

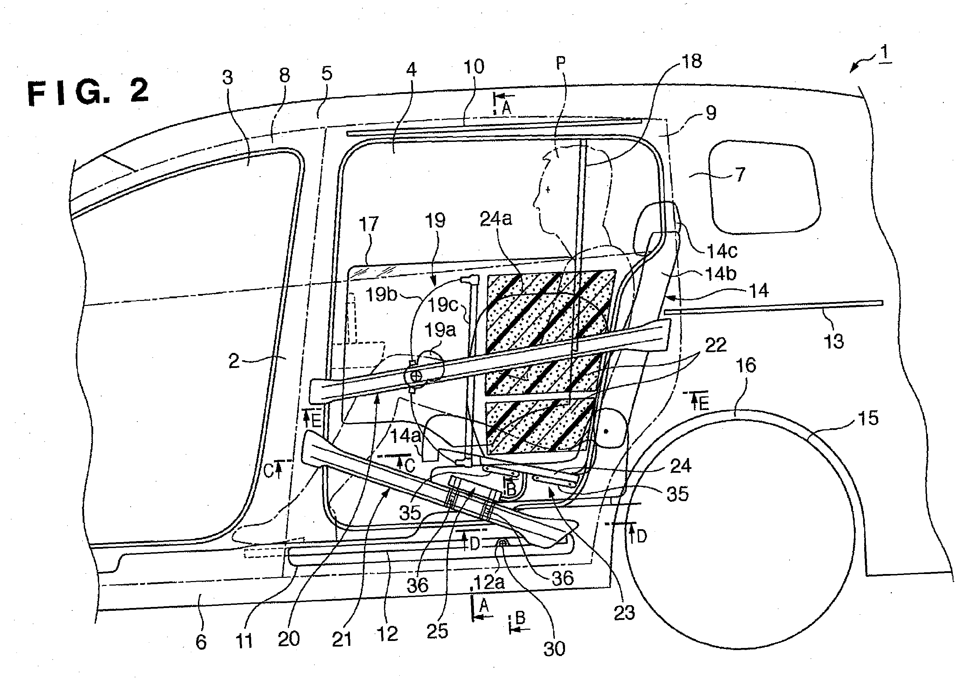

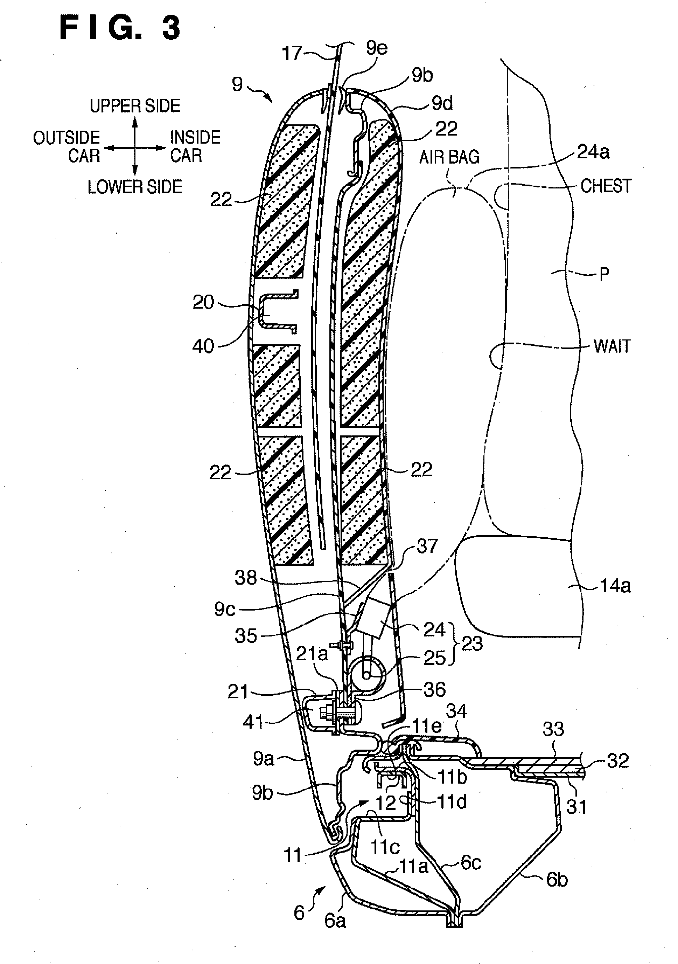

Fig. 1 is an overall side view of a vehicle 1 to which this embodiment is to be applied. Fig. 2 is a side perspective view showing as a main part the second-row seat of the vehicle 1 and its vicinity. Figs. 1 and 2 show the external left side portion of the vehicle. Fig. 3 is an enlarged sectional view of the main part taken along the line A - A in Fig. 2, and shows the main part of the interior of the rear side door as a side impact absorbing structure of this embodiment and the interior of the passenger compartment from the rear side of the car body.

The left side portion of the vehicle 1 has a front opening 3 and rear opening 4, each serving as an entrance/exit, with a center pillar 2 in between. A front pillar (not shown), a roof side rail 5, the center pillar 2, and a side sill 6 define the front edge, upper edge, rear edge, and lower edge, respectively, of the front opening 3. The center pillar 2, the roof side rail 5, a quarter pillar 7, and the side sill 6 define the front edge, upper edge, rear edge, and lower edge, respectively, of the rear opening 4.

A front side door 8 which forms a front left car body side wall is attached to the front opening 3 to be able to open the front opening 3. A rear side door 9 which forms a rear left car body side wall is attached to the rear opening 4 to be able to open the rear opening 4. The rear side door 9 is a so-called sliding door and slides in the back-and-forth direction of the car body so that it can open the rear opening 4. More specifically, an upper rail 10, lower rail 12, and center rail 13 guide the rear side door 9 to slide in the back-and-forth direction of the car body. The upper rail 10 is formed throughout the upper edge of the rear opening 4 along the roof side rail 5. A rail box 11 formed in the side sill 6 and extending in the back-and-forth direction of the car body stores the lower rail 12. The center rail 13 is formed on the surface of an outer panel behind the quarter pillar 7 and extends from the quarter pillar 7 backward of the car body at an intermediate height between the upper rail 10 and lower rail 12. Fig. 1 shows a state in which the rear side door 9 is slid backward of the car body to open the rear opening 4. Fig. 2 shows a state in which the rear side door 9 is slid forward of the car body to close the rear opening 4.

As shown in Fig. 3, the side sill 6 comprises as a basic arrangement a closed-section member formed by bonding the upper and lower flanges of a side sill outer portion 6a, side sill inner portion 6b, and side sill reinforcement 6c. The side sill outer portion 6a bulges outside the car. The side sill inner portion 6b bulges inside the passenger compartment. The side sill reinforcement 6c is disposed between the side sill outer portion 6a and side sill inner portion 6b and serves as a reinforcing steel sheet. According to this embodiment, the rail box 11 which stores the lower rail 12 is formed in the side sill 6, as described above.

The rail box 11 is formed between the side sill outer portion 6a and side sill reinforcement 6c and made of a rail box lower portion 11a and rail box upper portion 11b. A flange at the lower end of the rail box lower portion 11a is bonded to the side sill outer portion 6a, side sill inner portion 6b, and side sill reinforcement 6c, rises upward to bulge outside the car, and is bent into the passenger compartment at a predetermined height to form a bottom wall 11c of the rail box 11. The upper end of the rail box lower portion 11a rises from the bottom wall 11c upward along the side sill reinforcement 6c and is bonded to the side sill reinforcement 6c together with the lower end of the rail box upper portion 11b. Hence, the portion where the side sill reinforcement 6c, the upper end of the rail box lower portion 11a, and the lower end of the rail box upper portion 11b are bonded forms a vertical wall 11d of the rail box 11. The rail box upper portion 11b is bent outside the car from its lower end and forms an upper wall 11e of the rail box 11. In this manner, the rail box 11 is open to the outside of the car. The lower rail 12 is bonded to the lower portion of the upper wall 11e. As shown in Fig. 3, the lower rail 12 has an upward convex section.

The side edge of a floor panel 31 in the direction of the car width is bonded to the car interior-side shoulder of the side sill inner portion 6b. The floor panel 31 forms the floor surface in the passenger compartment. A sound absorbing material 32 and floor mat 33 are laid on the floor panel 31. A scuff plate 34 covers the upper surface of the side sill inner portion 6b. The scuff plate 34 protects the : side sill inner portion 6b from being rubbed by the shoe sole of the passenger when he or she gets on/off the car, and/or improves the design.

A second-row seat 14 is set on the floor panel 31 at a position where it is close to the car interior-side side surface of the rear side door 9, when the rear side door 9 is closed, and overlaps the rear side door 9 when seen from the side of the car body. The second-row seat 14 is a rear seat provided behind the first-row seat (front seat) including the driver's seat. The second-row seat 14 has a seat cushion 14a, backrest 14b, and headrest 14c, and is attached to be slidable in the back-and-forth direction. A passenger P is to be seated on the seat cushion 14a. The rear end of the seat cushion 14a supports the backrest 14b. The headrest 14c is disposed at the upper end of the backrest 14b. The second-row seat 14 also includes a reclining mechanism which adjusts the reclining angle of the upper half body of the passenger P. Behind the second-row seat 14 and under the respective quarter pillars 7, rear wheel housings 16 are formed at the two ends of the widthwise direction of the car. Each rear wheel housing 16 bulges into the passenger compartment in the vicinity of the rear portion of the second-row seat 14 and accommodates a rear wheel 15.

As shown in Fig. 2, the vertical wall of the rear portion of the lower rail 12 which is on the outer side of the car has a notch 12a. That portion of the rear side door 9 which corresponds to the notch 12a is provided with a catcher pin 30. The catcher pin 30 projects from the rear side door 9 toward the rail box 11, formed in the side sill 6, in the form of a convex. The catcher pin 30 serves to regulate the rear side door 9 from entering the rear opening 4 upon lateral collision.

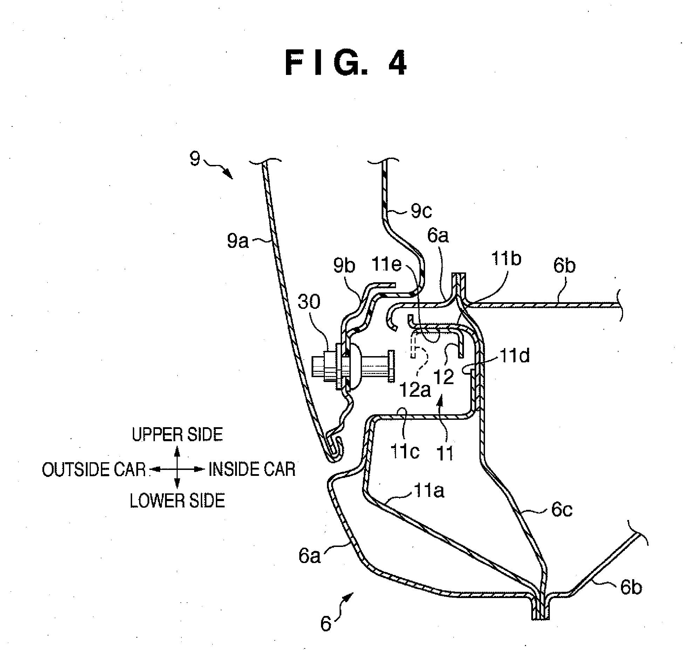

Fig. 4 is an enlarged sectional view of the main part taken along the line B - B in Fig. 2, and shows the arrangement of the catcher pin 30 and its vicinity. The interior finishings such as the floor mat are not illustrated for the sake of visual simplicity. An insertion hole for the catcher pin 30 is formed at the overlapping portions of a door inner panel 9b which forms the door main body and of the lower edge of a module plate 9c (to be described later). The catcher pin 30 is inserted in the insertion hole and fixed in it. Upon lateral collision, as the rear side door 9 is deformed into the passenger compartment, the catcher pin 30 enters the rail box 11 through the notch 12a and is locked in the rail box 11. This regulates the rear side door 9 from entering the rear opening 4.

The rear side door 9 is a door that incorporates a vertically movable window glass 17 and basically formed of a door outer panel 9a, the door inner panel 9b, the module plate 9c, and a door trim 9d. The door outer panel 9a is located outermost in the direction of the car width and forms the outer surface of the door. The door inner panel 9b is located more inside than the door outer panel 9a and forms a door main body portion. The module plate 9c is attached to the door inner panel 9b and serves as a plate member that forms the base plate of, for example, a door module unit. The door trim 9d covers that portion of the door inner panel 9b which is on the passenger compartment side. The door module unit is obtained by integrally assembling door function components such as a speaker, wire harness, window regulator, and door clutch unit on the module plate 9c to form a module. This is mainly aimed at weight reduction and improvement of the assembling easiness. As the material of the module plate 9c, a highly rigid thermoplastic resin is preferably used from the viewpoint of weight reduction and improvement in degree of molding freedom.

The door outer panel 9a and door inner panel 9b are formed of steel sheets and bonded to each other at their side edges and lower edges by welding or the like to form a hollow portion between them. Slit-like openings through which the window glass 17 can move vertically are formed at the upper edges of the door outer panel 9a and door inner panel 9b. The openings are provided with weather strips 9e to squeegee any water attached to the window glass 17.

As described above, the vertically movable window glass 17 is arranged in the rear side door 9. Reference numeral 18 denotes a first guide rail which guides the vertical movement of the window glass 17; and reference numeral 19 a window regulator. For example, the window regulator 19 is a wire type window regulator and converts the rotation of a motor 19a into the vertical motion of the window glass 17 along a second guide rail 19c through a wire 19b. These functional components for vertically moving the window glass 17 are assembled on the module plate 9c. Fig. 2 shows a state in which the window glass 17 is lowered to the lowermost position.

Furthermore, a first impact bar 20 and second impact bar 21 are arranged in the rear side door 9. The first impact bar 20 extends almost in the back-and-forth direction at a height almost corresponding to the belt line of the passenger P. The second impact bar 21 obliquely extends under the first impact bar 20 such that its rear portion is inclined downward. When the two impact bars are arranged to be spaced apart from each other in the vertical direction in this manner, the impact acting on the rear side door 9 upon lateral collision can be received by a large area in the vertical direction. As shown in Fig. 3, the first impact bar 20 and second impact bar 21 have sideways convex sections which project outside the car to form sections 40 and 41, and extend in the back-and-forth direction of the car body. Particularly, in this embodiment, flat members 21a which oppose the module plate 9c through the door inner panel 9b are bonded to the upper and lower flanges of the second impact bar 21. The flat members 21a can close the section 41 to reinforce it, and can transmit the load acting on the second impact bar 21 upon lateral collision to the module plate 9c in a dispersed manner.

The two ends of each of the first and second impact bars 20 and 21 are fixed at portions corresponding to the car body rigid members to ensure the solid structure of the rear side door 9. In the example shown in Fig. 2, the front end of the first impact bar 20 is fixed to the vertically intermediate portion of the front edge of the rear side door 9 at a position where it overlaps the center pillar 2 when seen from the side of the car body. The rear end of the first impact bar 20 is fixed to the vertically intermediate portion of the rear edge of the rear side door 9 at a position where it overlaps the quarter pillar 7 when seen from the side of the car body. In the same manner as the first impact bar 20, the front end of the second impact bar 21 is fixed to the vertically intermediate portion of the front edge of the rear side door 9 at a position where it overlaps the center pillar 2 when seen from the side of the car body. The rear end of the second impact bar 21 is fixed to the rear portion of the lower edge of the rear side door 9 at a position where it overlaps the rear side door 9 when seen from the side of the car body. Hence, the load acting upon lateral collision can be transmitted in a dispersed manner to the rear portion of the rigid side sill 6 to avoid the intermediate portion of the rail box 11 which is disadvantageous in terms of strength because it opens to the outer side of the car.

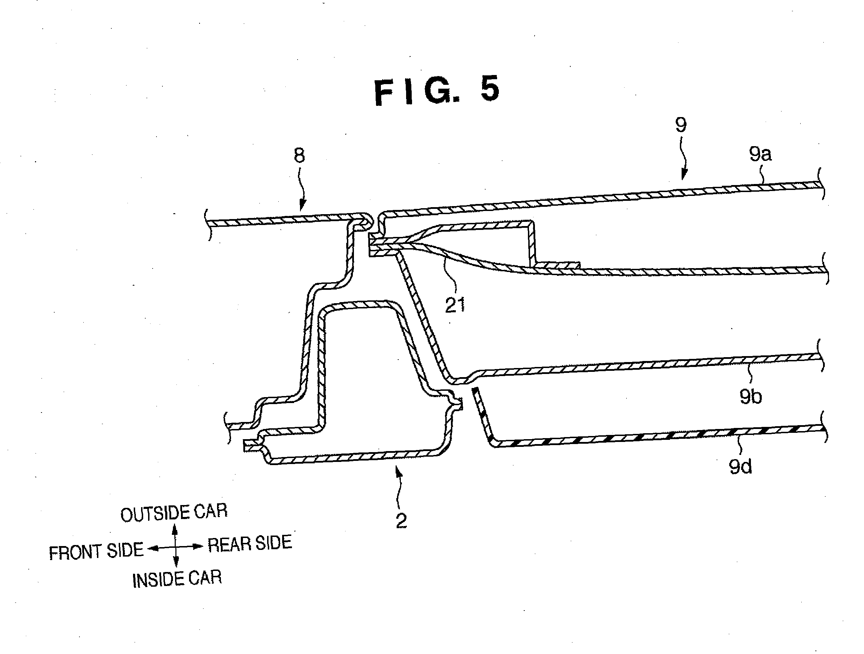

Fig. 5 is an enlarged sectional view of the main part taken along the line C - C in Fig. 2, and shows how the front end of the second impact bar 21 is connected to the rear side door 9 at a position where it overlaps the center pillar 2 when seen from the side of the car body. Note that some interior finishings are not illustrated in the same manner as in Fig. 4. More specifically, the front end of the second impact bar 21 is bonded to and sandwiched by the door outer panel 9a and door inner panel 9b which form the rear side door 9, such that the second impact bar 21, door outer panel 9a, and door inner panel 9b overlap each other. This ensures a strong structure.

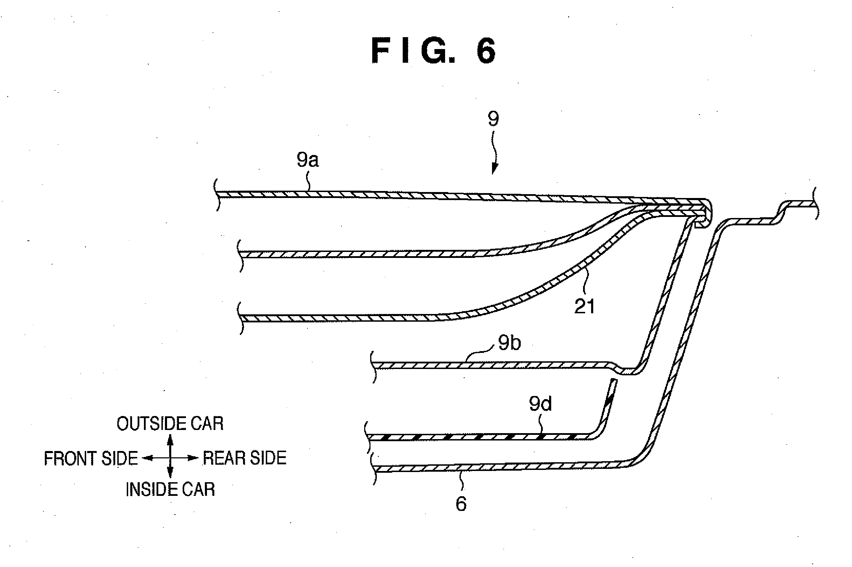

Fig. 6 is an enlarged sectional view of the main part taken along the line D - D in Fig. 2, and shows how the rear end of the second impact bar 21 is connected to the rear side door 9 at a position where it overlaps the side sill 6 when seen from the side of the car body. Note that some interior finishings are not illustrated in the same manner as in Fig. 4. More specifically, the rear end of the second impact bar 21 is bonded to the door outer panel 9a and door inner panel 9b such that the second impact bar 21, door outer panel 9a, and door inner panel 9b overlap each other. This ensures a strong structure.

As shown in Figs. 2 and 3, the rear side door 9 further accommodates impact absorbing members 22 at positions where they support the trunk (the waist and chest) of the passenger P seated on the second-row seat 14. More specifically, the impact absorbing members 22 are accommodated between the door inner panel 9b and door trim 9d, between the module plate 9c and door trim 9d, and inside the door outer panel 9a on the passenger compartment side, above the height of the seat surface of the seat cushion 14a. Upon lateral collision, the impact absorbing members 22 elastically abut against the shoulder and its vicinity of the passenger through the door trim 9d, and the rear side door 9 is displaced into the passenger compartment, thereby moderating the impact acting on the passenger.

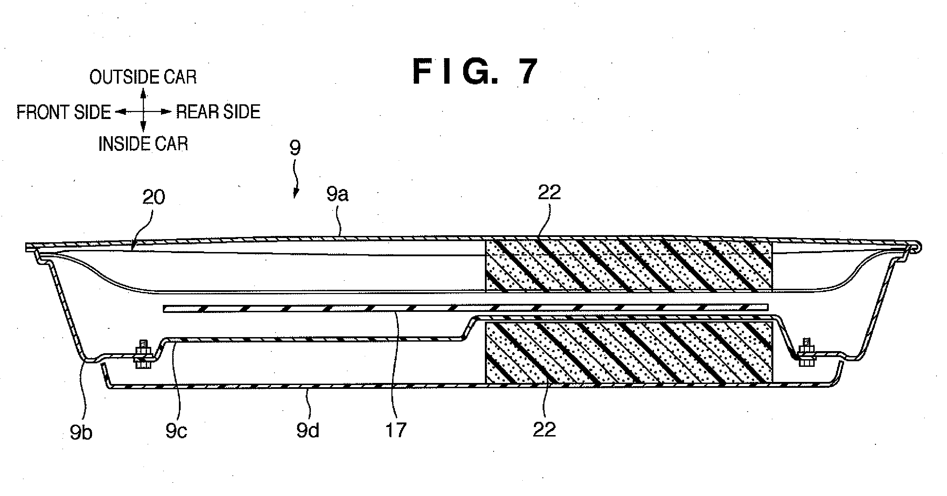

Fig. 7 is a sectional view of the main part taken along the line E - E in Fig. 2. The impact absorbing members 22 need only cover the position of the passenger P on the second-row seat 14. Hence, it suffices if the impact absorbing members 22 are accommodated in only the rear half of the rear side door 9, as shown in Fig. 7, and need not be accommodated in the front half of the rear side door 9 as well.

According to this embodiment, furthermore, an air bag unit 23 to cope with lateral collision is provided at a position below the impact absorbing members 22, that is, at a position below the seat surface of the seat cushion 14a. The air bag unit 23 includes an air bag 24 and inflator 25 as its constituent elements. Usually, the air bag 24 is stored in the air bag unit 23 in a folded state under the impact absorbing members 22. The module plate 9c supports the base of the air bag 24 through a bracket 35. At a position close to the rear side of the second impact bar 21 and closer to the passenger compartment side than the second impact bar 21, the inflator 25 is fixed to the second impact bar 21, door inner panel 9b, and module plate 9c through a bracket 36.

At this time, the inflator 25 is preferably attached to share a non-overlapping portion with the second impact bar 21 when seen from the side of the car body. More specifically, the inflator 25 is preferably disposed to be located in the vicinity of the upper portion of the lower side of the second impact bar 21.

When the inflator 25 is connected to the second impact bar 21, dispersion of the load applied upon lateral collision is promoted, and the rear side door 9 can be prevented from intruding into the passenger compartment. As the inflator 25 and second impact bar 21 are connected to each other at a plurality of portions or through a predetermined width, they can reinforce each other.

Furthermore, as the air bag unit 23 is disposed on the passenger compartment side of the module plate 9c, layout conflict between the air bag unit 23 and second impact bar 21 and between the air bag unit 23 and window regulator 19 can be suppressed.

In this manner, according to this embodiment, the air bag unit 23 is not arranged at a position where it faces the passenger P. Therefore, the impact absorbing members having an excellent short-stroke impact absorbing capacity can be arranged widely. The air bag 24 which is excellent in dispersing the load for the passenger is expanded in the air bag unit 23 on the passenger compartment side. This realizes sufficient absorption of the lateral collision load and dispersion of the load to be transmitted to the passenger with a thin car body side wall while ensuring the degree of seat design freedom and the large passenger compartment, thus improving the safety.

According to this embodiment, the impact absorbing members 22 do not directly hit the passenger. Thus, as the impact absorbing members 22 on the passenger compartment side, those which are comparatively hard and have a high impact absorption capacity can be used. Examples of such an impact absorption member include, in addition to low-expansion (10 times or less) urethane, for example, trim rib reinforcement, a honeycomb structure, and a cylindrical impact absorbing member formed of a metal foil, paper, a resin sheet, or the like.

Upon lateral collision, air from the inflator 25 expands the air bag 24 at a region 24a between the door trim 9d and the passenger, particularly portions corresponding to the waist and chest (including the shoulder) of the passenger. In this embodiment, in order to enable this, the door trim 9d beside the seat cushion 14a has a slit 37 through which the expanding air bag 24 enters the passenger compartment. Also, an air bag guide 38 to guide the air bag 24 to enter the slit 37 may be formed on the module plate 9c or door trim 9d.

In this manner, according to this embodiment, upon lateral collision, the impact absorbing members 22 support the comparatively hard wait and chest (including the shoulder) of the passenger, and the elastic air bag 24 disperses the load to the entire trunk of the passenger almost evenly. This reduces the burden of the impact on the passenger.

At this time, preferably, the air bag 24 is expanded not right upward from a position where it has been stored but in a direction inclined toward the rear portion of the car body. As described above, the second-row seat 14 is slidable in the back-and-forth direction. Hence, the air bag 24 desirably covers the slidable range of the second-row seat 14 entirely. Assume that the air bag unit 23 is provided near the quarter pillar 7. When the second-row seat 14 slides closer to the front side, the air bag 24 may be too far away from the passenger and cannot be expanded quickly or reliably. This problem can be solved if a larger air bag is used. In this case, however, an increase in cost and weight of the air bag unit is inevitable.

In view of this, according to this embodiment, the inflator 25 is attached to the second impact bar 21 which is closer to the front side than the quarter pillar 7 or wheel housing 16. The air bag 24 is expanded obliquely backward. Although the air bag unit cannot be arranged immediately under the second-row seat 14 because the rear wheel housing 16 is formed in the vicinity of the second-row seat 14, the air bag can be effectively expanded toward the second-row seat 14.

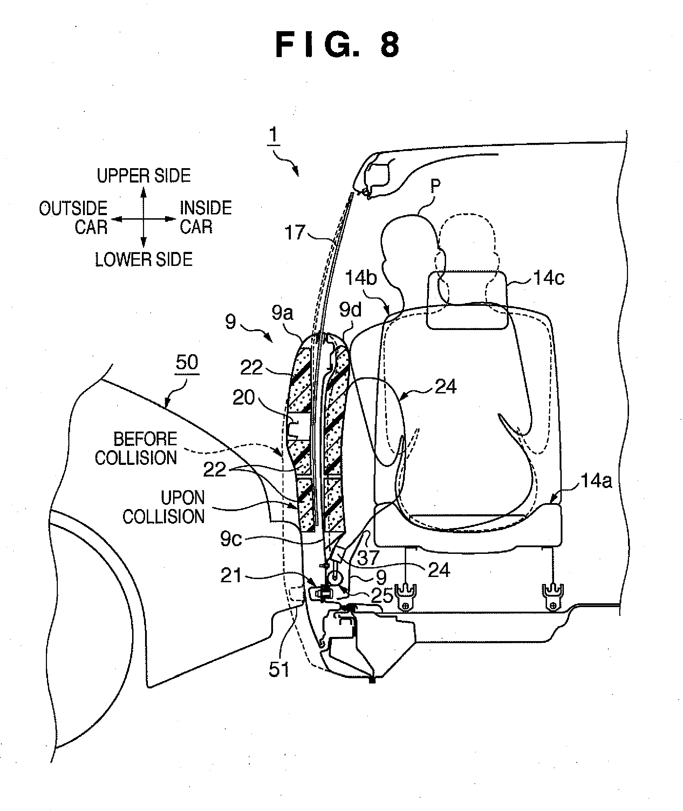

Fig. 8 is a view for explaining the effect of the side impact absorbing structure for the vehicle against lateral collision according to this embodiment. Assume a case in which a passenger car type vehicle 50 collides with the side surface of the rear side door 9 of the vehicle 1 of this embodiment. In most cases, to avoid collision, the driver of the vehicle 50 may brake hard immediately before the vehicle 50 collides against the vehicle 1. In this case, due to the braking operation, the front portion of the vehicle 50 sinks (nose dive). In this state, a front bumper 51 of the vehicle 50 may undesirably collide with that portion of the lower portion of the rear side door 9 of the vehicle 1 where no impact absorbing member 22 is accommodated.

In this embodiment, the second impact bar 21 is formed to project outside the car. Upon such collision, the front bumper 51 of the vehicle 50 first abuts against the second impact bar 21 through the door outer panel 9a. If the impact is strong enough to deform the second impact bar 21, as the second impact bar 21 is deformed, the module plate 9c and the impact absorbing members 22 accommodated in the module plate 9c on the passenger compartment side are pushed out into the passenger compartment. The impact absorbing members 22 elastically abut against the passenger P through the door trim 9d. Thus, the impact on the passenger P can be moderated effectively.

Moreover, at this time, the inflator 25 attached to the module plate 9c also moves together with the module plate 9c toward the passenger compartment. Therefore, the inflator 25 will not be left alone to be unable to expand the air bag 24.

In such collision, the module plate 9c may undesirably be broken to lose the pusher function of pushing out the impact absorbing members 22 into the passenger compartment. In view of this, according to this embodiment, the inflator 25 as a rigid body is attached to the module plate 9c which is under the rear side door 9 where no impact absorbing member 22 is accommodated. The inflator 25 serves as a reinforcing member to protect the module plate 9c. Therefore, even if no impact absorbing member is accommodated in the lower region of the rear side door 9, the same effect as that obtained when an impact absorbing member is accommodated in the lower region of the rear side door 9 can be obtained. As described above, according to this embodiment, the door function components such as the speaker, wire harness, window regulator, and door clutch unit are assembled on the module plate 9c to form the door module unit. These function components can also reinforce the impact bar abutting portion. This can improve the reliability of the function of pushing out the impact absorbing members into the passenger compartment without increasing the number of components or adding any reinforcing structure. In this case, the inflator 25 is arranged under the seat surface of the seat cushion 14a and will not collide with the passenger.

According to this embodiment, the second impact bar 21 is arranged to be inclined backward. This enlarges the protection range in the vertical direction of height against the bumper 51 of the vehicle 50 that collides against the vehicle 1. The load acting on the center pillar 2 can be dispersed near the side sill 6 and floor panel 31 to avoid the rail box 11 which is disadvantageous in terms of strength because it opens to the outer side of the car at the lower edge of the entrance/exit. On the other hand, the lower portion (waist) of the passenger body might not be protected sufficiently. However, the inflator 25 can complement this disadvantage. At the same time, since the inflator 25 is arranged at an effective position with a compact space, an increase in weight of the car body and an increase in thickness of the door are suppressed, thus improving safety.

Although the side impact absorbing structure of the present invention is applied to the rear side door 9 on the left side of the vehicle 1 in the above embodiment, it can naturally be applied to the right side of the vehicle 1 in completely the same manner. A person skilled in the art will easily understand that the side impact absorbing structure of the present invention is also applicable to a car body side wall that does not have a door function.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A side impact absorbing structure for a vehicle having a seat arranged on a floor of a passenger compartment and a car body side wall arranged on a side of the seat to be spaced apart therefrom, the structure comprising:
an impact absorbing member which is accommodated in the car body side wall at a position corresponding to a seating region set on the seat; and
a buffer unit, accommodated in the car body side wall, configured to cooperate with said impact absorbing member upon lateral collision to moderate an impact on a side portion of a passenger,
said buffer unit including a rigid body portion which is arranged at a position where the rigid body portion does not overlap said impact absorbing member in the car body side wall and the seating region when seen from a side of a car body.

2. The structure according to claim 1, wherein said buffer unit comprises an air bag unit arranged at a position where the air bag unit does not overlap said impact absorbing member and the seating region when seen from the side of the car body,
the air bag unit including the rigid body portion and an air bag which is expanded upon lateral collision to cover said impact absorbing member on a passenger compartment side.

3. The structure according to claim 2, wherein said impact absorbing member is supported by the car body side wall so as to be pushed out upon lateral collision to be closer to the passenger compartment than a main body of the car body side wall, and
the air bag unit is supported on a passenger compartment side of a module plate which covers an outer side of said impact absorbing member.

4. The structure according to claim 2, wherein said impact absorbing member is provided at portions corresponding to a lower portion and an upper portion of the seating region, and
the air bag is expanded along a passenger compartment side of the portions corresponding to the lower portion and the upper portion of the seating region.

5. The structure according to claim 2, wherein the rigid body portion is disposed under a seat surface of the seat.

6. The structure according to claim 2, wherein the car body side wall comprises a sliding door which openably covers an entrance/exit on the side of the seat.

7. The structure according to claim 6, further comprising a rail box which extends at a lower edge of the entrance/exit in a back-and-forth direction of the car body and opens to an outside of the car to store a lower rail of the sliding door,
wherein the sliding door comprises an impact bar obliquely extending between a vertically intermediate portion of a front edge and a lower edge rear portion of the entrance/exit, and
the rigid body portion is supported by a rear portion of the impact bar.

8. The structure according to any one of claims 1 to 6,
wherein the car body side wall comprises an entrance/exit formed on a side of the seat, and a door which openably covers the entrance/exit,
the door including
an inner panel and an outer panel bonded to each other to form a hollow portion therebetween,
said impact absorbing member attached in the hollow portion of the door so as to be pushed out into the passenger compartment, upon lateral collision, at a portion facing the seating region set on the seat,
a plate member which covers said impact absorbing member in the hollow portion from the outer side of the car to constitute said buffer unit, and
an impact bar which extends along the outer panel to constitute said buffer unit,
the impact bar including a non-facing portion serving as the rigid body portion which extends through portions other than the portion that faces the seating region, and
the plate member extending to a facing portion to face the non-facing portion from the passenger compartment side.

9. The structure according to claim 8, wherein a separate member is attached to an impact bar facing portion of the plate member which faces the non-facing portion of the impact bar to exhibit another function of reinforcing the impact bar facing portion.

10. The structure according to claim 9, wherein the impact bar and the plate member are fastened together with the separate member.

11. The structure according to claim 8, wherein the impact bar projects to a side closer to the outer side of the car than said impact absorbing member and the plate member, includes a predetermined width in a direction of car width, and is provided with a flat portion, on a passenger compartment side, to face the plate member.

12. The structure according to claim 1,
wherein the car body side wall comprises an entrance/exit formed on a side of the seat, and a door which openably covers the entrance/exit,
the door including
an inner panel and an outer panel bonded to each other to form a hollow portion therebetween,
said impact absorbing member attached in the hollow portion of the door so as to be pushed out into the passenger compartment, upon lateral collision, at a portion facing the seating region set on the seat,
a plate member which covers said impact absorbing member in the hollow portion from the outer side of the car to constitute said buffer unit, and
an impact bar which extends along the outer panel to constitute said buffer unit,
the impact bar including a non-facing portion serving as the rigid body portion which extends through portions other than the portion that faces the seating region,
the plate member extending to a facing portion to face the non-facing portion from the passenger compartment side, and
the rigid body portion being attached to an impact bar facing portion of the plate member which faces the non-facing portion of the impact bar, to reinforce the impact bar facing portion.
